(19) **Europäisches Patentamt**

**European Patent Office**

**Office européen des brevets**

(11) **EP 0 990 793 B1**

(12) **EUROPEAN PATENT SPECIFICATION**

(45) Date of publication and mention
of the grant of the patent:
**25.08.2004 Bulletin 2004/35**

(51) Int Cl.⁷: **F02N 11/08**

(21) Application number: **99118979.6**

(22) Date of filing: **27.09.1999**

(54) **Stop and restart device for vehicular engine**

Start-stopvorrichtung für Kraftfahrzeugmotor

Dispositif d'arrêt et de redémarrage pour moteur de véhicule

(84) Designated Contracting States:
**DE FR GB**

(30) Priority: **28.09.1998 JP 27359898**
**25.03.1999 JP 8134299**
**26.04.1999 JP 11837099**

(43) Date of publication of application:
**05.04.2000 Bulletin 2000/14**

(73) Proprietor: **TOYOTA JIDOSHA KABUSHIKI KAISHA**
**Aichi-ken 471-8571 (JP)**

(72) Inventors:
• **Nagano, Shuji**
**Toyota-shi, Aichi-ken 471-8571 (JP)**
• **Kuramochi, Kojiro**
**Toyota-shi, Aichi-ken 471-8571 (JP)**
• **Tabata, Atsushi**
**Toyota-shi, Aichi-ken 471-8571 (JP)**
• **Nakao, Hatsuo**
**Toyota-shi, Aichi-ken 471-8571 (JP)**
• **Mizutani, Koichi**
**Toyota-shi, Aichi-ken 471-8571 (JP)**
• **Nomura, Tokuhisa**
**Toyota-shi, Aichi-ken 471-8571 (JP)**
• **Kusaka, Yasushi**
**Toyota-shi, Aichi-ken 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**EP-A- 0 072 997**          **US-A- 4 414 937**

• **PATENT ABSTRACTS OF JAPAN vol. 1997, no. 12, 25 December 1997 (1997-12-25) & JP 09 222035 A (ISUZU MOTORS LTD), 26 August 1997 (1997-08-26)**

**Description**

BACKGROUND OF THE INVENTION

1.Field of the invention

The present invention relates generally to a stop and restart device according to the preamble of claim 1, and more particularly to a stop and restart device for an engine provided with a brake booster which uses intake negative pressure generated by the engine rotation as the boost source.

2.Description of the Related Art

As a related art, an engine stop and restart device constructed such that the engine is stopped when predetermined stop conditions are met and the engine is started when predetermined start conditions are met, so as to save fuel, reduce exhaust emissions, to reduce noise, and the like, is put to practical use. That is, in a vehicle provided with a stop and restart device for an engine, the engine is stopped after a predetermined time has lapsed from releasing of a foot from a clutch pedal, while depressing of the clutch pedal during engine stop starts the engine (for example, Japanese Patent Application Laid-Open No. HEI 9-222035).

In such a vehicle, a brake booster is widely used for reducing the operating effort of the brake pedal when braking. The brake booster generally uses intake negative pressure of the engine as its boost source. The intake negative pressure is generated by rotation of the engine.

In a vehicle provided with an engine stop and restart device, the driver depresses and returns a foot brake pedal several times when the engine is in a stopped state so that the negative pressure which serves as the boost energy for the brake booster is consumed and the intake negative pressure decreases. As a result, the boost function of the brake booster is deteriorated, leading to deterioration of brake assist performance.

A generic engine stop and restart device is known from EP-A-0 072 997. The device is installed in a vehicle provided with a brake booster that generates an assist force for assisting a brake force, stops an engine when predetermined stop conditions are met and restarts the stopped engine when predetermined restart conditions are met. The device has a vehicle condition detection means for detecting a vehicle condition when the engine is in a stopped state. Furthermore, the device comprises a brake booster internal pressure detection means for detecting the internal pressure of the brake booster.

SUMMARY OF THE INVENTION

The present invention has been made in the light of the aforementioned drawbacks, and it is an object of the present invention to provide a stop and restart device for a vehicle provided with a brake booster.

This object is achieved by an engine stop and restart device having the features of claim 1.

Advantageous further developments are set out in the dependent claims.

According to the invention, the device comprises an intake side negative pressure detection means for detecting the negative pressure on the intake side of the engine, and a pressure comparison means for comparing the intake side negative pressure and the brake booster internal pressure, and that a stop of the engine is permitted by the control means when the assist force decrease detection means detects that the difference between the intake side negative pressure and the brake booster internal pressure is equal to or less than a predetermined value during engine operation. Comparing the intake pressure and the brake booster internal pressure (negative pressure) while the engine is operating makes it possible to determine that the brake booster pressure is secured for sure. This makes it possible to realize a sufficient brake assist performance even when an engine stop control has been started.

BRIEF DESCRIPTION OF THE DRAWINGS

The foregoing object as well as further features and advantages of the present invention will become apparent from the following description of a preferred embodiment with reference to the accompanying drawings, wherein like numerals are used to represent like elements and wherein :

Fig. 1 is a flowchart illustrating controls conducted in a first embodiment for stopping and restarting an engine of a vehicle according to the present invention;
Fig. 2 is a block diagram illustrating a system of an engine drive unit of a vehicle to which the present invention is applied;
Fig. 3 is a diagram illustrating the relationship between signals input to and output from an ECU (electronic control unit) to which the present invention is applied;
Fig. 4 is a hydraulic circuit diagram illustrating essential portions of a hydraulic control device for implementing a quick pressure increase control in the embodiment;
Fig. 5 is a diagram illustrating the air flow and state of pressure in intake and exhaust systems of the engine and a brake system;
Fig. 6 is a side view of a foot brake pedal and a foot brake sensor of a vehicle according to the embodiment;
Fig. 7 is a side view of a side brake lever and a side brake switch of a vehicle according to the embodiment;

Fig. 8 is a time chart illustrating an example of behaviors of foot brake signals FTSW and brake booster pressure PB during engine stop;

Fig. 9 is a diagram illustrating an oil supply characteristics or the like of a forward clutch taken along a time axis;

Fig. 10 is a flowchart illustrating a second embodiment of an automatic engine stop and restart of a vehicle according to the present invention;

Fig. 11 is a side view of a foot brake pedal and a foot brake switch of a vehicle of another embodiment according to the present invention;

Fig. 12 is a flowchart illustrating controls implemented in a third embodiment of the automatic engine stop and restart control of a vehicle according to the present invention;

Fig. 13 is a flowchart illustrating controls implemented in a fourth embodiment of the automatic engine stop and restart control of a vehicle according to the present invention;

Fig. 14 is a flowchart illustrating controls implemented in a fifth embodiment of the automatic engine stop and restart control of a vehicle according to the present invention;

Fig. 15 is a characteristics chart illustrating a change in atmospheric pressure and a necessary brake booster pressure according to altitude;

Fig. 16 is a flowchart illustrating controls implemented in a sixth embodiment of the automatic engine stop and restart control of a vehicle according to the present invention; and

Fig. 17 is a chart illustrating a relationship between brake pressure PB and an intake pressure PIM when the vehicle is running at a low altitude and a high altitude.

## DETAILD DESCRIPTION OF THE PREFERRED EMBODIMENTS

Preferred embodiments of the present invention will be described with reference to the accompanying drawings. A device for a vehicle equipped with an automatic transmission having changeable speeds will be described as an example of a gear change device. However, the application of the present invention is not limited to such device, but is also applicable to a device for a vehicle on which a manual transmission (MT) or a continuously variable transmission (CVT).

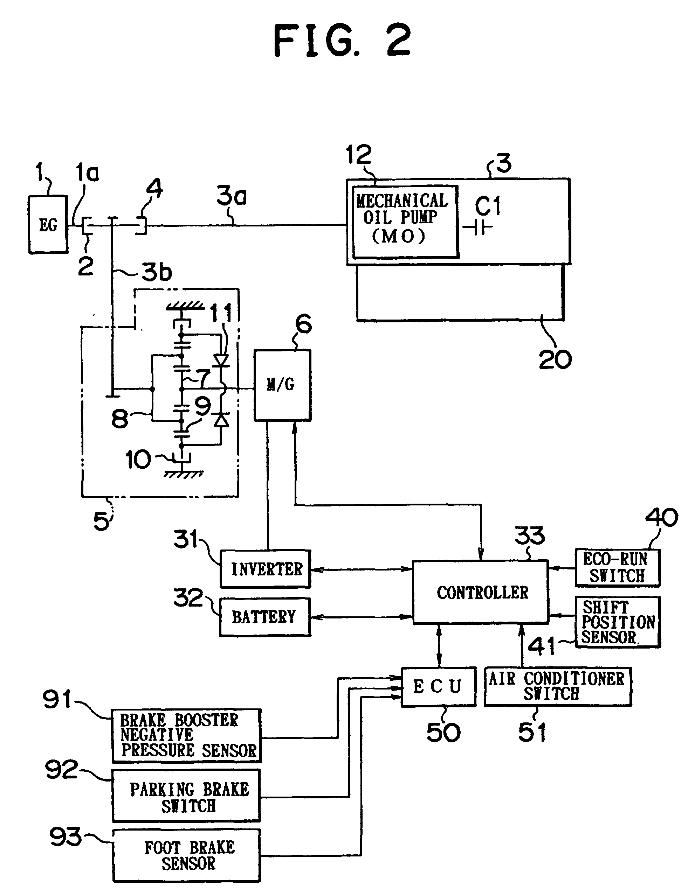

First, according to the first embodiment, a drive system, as shown in Fig. 2, is constructed such that an engine is automatically stopped when predetermined stop conditions are met and the engine is restarted when predetermined restart conditions are met.

Fig. 2 is a schematic block diagram of a drive system of a vehicle having an automatic engine stop and restart device according to the embodiment. A crankshaft 1a of an engine (EG) 1 is connected to an input shaft 3a of an automatic transmission 3 via clutches 2 and 4. Further, a motor generator (M/G) 6, which functions as a motor and a generator, is connected to the crankshaft 1a of the engine 1 via a deceleration device 5, a transmission mechanism 3b, and the clutch 2. The motor generator 6 is also connected to the input shaft 3a of the automatic transmission 3 via the deceleration device 5, the transmission mechanism 3b, and the clutch 4. The motor generator 6 is for starting the engine 1 in place of an engine starter when restoring the engine 1 from an automatically stopped state. The motor generator 6 is also for generating electricity when charging or regenerating energy.

The deceleration device 5 is of a planetary gear type, and includes a sun gear 7, a carrier 8, and a ring gear 9. The deceleration device 5 is interposed between the motor generator 6 and the transmission mechanism 3b via a brake 10 and a one-way clutch 11.

A mechanical oil pump (MO) 12 for supplying oil (hydraulic fluid) to the automatic transmission 3 is built into the automatic transmission 3, and the mechanical oil pump 12 is driven by the power from the engine 1 being transmitted to the input shaft 3a. The oil discharged from the mechanical oil pump 12 is supplied to a hydraulic control device 20 of the automatic transmission 3.

Clutches (a forward clutch C1 engaged when running forward, a reverse clutch engaged when running backwards, and the like), which are engaged when a vehicle is running, and a brake are provided inside the automatic transmission 3. The hydraulic control device 20 implements a predetermined shifting control by supplying hydraulic pressure to the clutches and the brake.

An inverter 31 is electrically coupled to the motor generator 6. The inverter 31 makes it possible to vary the supply of electric energy from a battery 32, which is a power source, to the motor generator 6 by switching. Accordingly, the rotational of speed of the motor generator 6 can be varied. Further, the inverter 31 serves the function of switching to a state such that the battery 32 is charged with electric energy from the motor generator 6. A controller 33 is a controller for controlling engagement and disengagement of the clutch 4 and controlling switching of the inverter 31.

Various signals, including signals from an automatic engine stop running mode (eco-run mode) switch 40, signals from a shift position sensor 41, and signals from an air conditioner switch 51, which are necessary in implementing the automatic stop control, are input to the controller 33. The controller 33 is linked with an ECU (electronic control unit) 50 for controlling the engine, the automatic transmission, and the like.

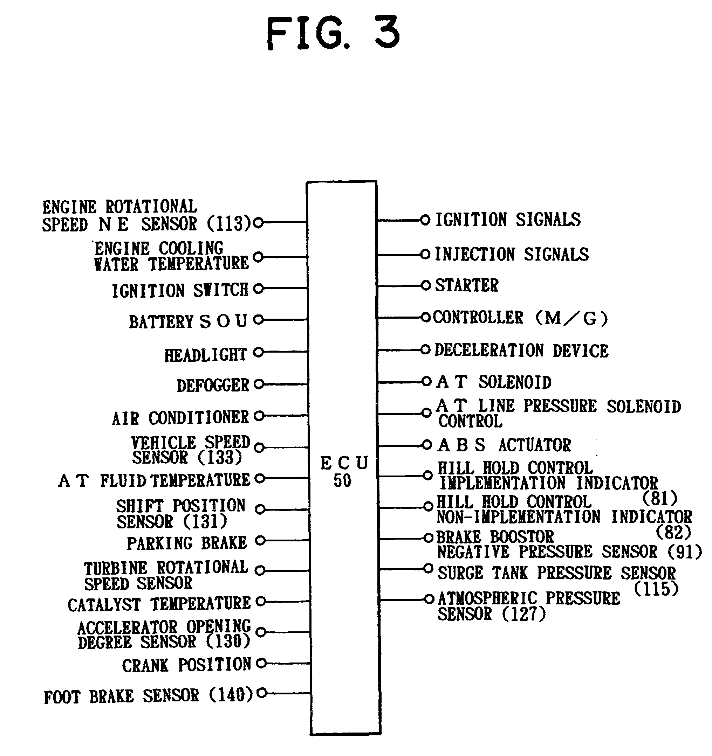

In this case, signals from a brake booster negative pressure sensor 91, signals from a parking brake switch 92, and signals from a foot brake sensor 93 are input to the ECU 50. These sensors and switches will be described later. Further, elements input to and output from the ECU 50 are shown in Fig. 3 in detail. To be specific, signals input to the ECU 50 include, signals concerning engine rotational speed NE113, engine water temperature, and state of an ignition switch, signals concerning state of charge SOC of the battery and state of a headlight, on/off signals of a defogger, on/off signals of an air conditioner, vehicle speed sensor 133, AT fluid temperature, shift position sensor 131, on/off signals of a parking brake, on/off signals of a foot brake 140, catalyst temperature, accelerator opening degree sensor 130, crank position signals, turbine rotational speed sensor of a torque converter, signals from a brake booster negative pressure sensor 91, signals from a surge tank pressure sensor 115, and signals from an atmospheric pressure sensor 127. Further, signals output from the ECU 50 include, ignition signals, injection signals, signals to a starter, signals to a controller 7 for the motor generator, signals to a deceleration device, signals to an AT solenoid, signals to an AT line pressure control solenoid, signals to an electronic throttle valve, signals for controlling a solenoid of an ABS actuator, signals to a hill hold control implementation indicator 81, and signals to a hill hold control non-implementation indicator.

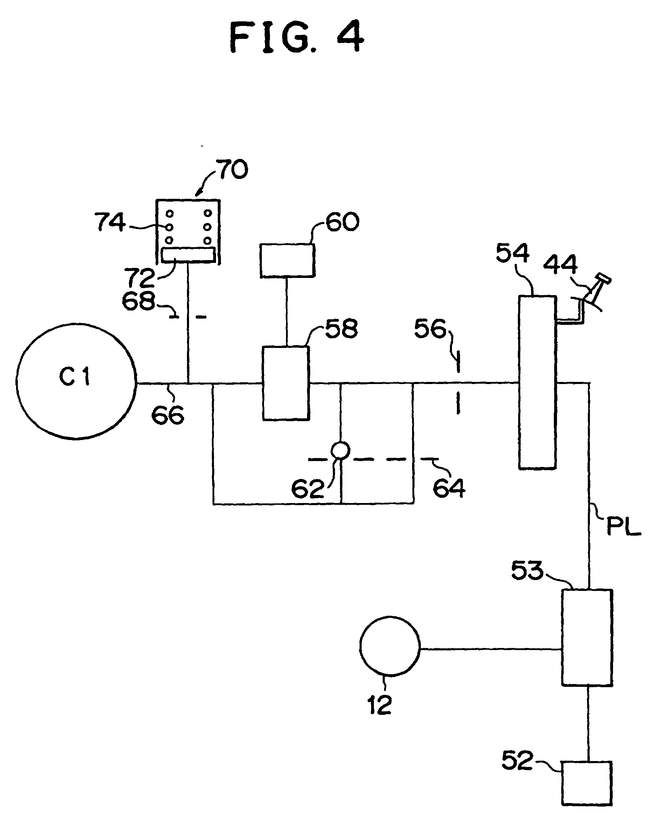

Next, a construction for engaging the forward clutch C1 in the above-mentioned automatic transmission 3 will be described (same construction applies for the reverse clutch, so the description thereof will be omitted). Fig. 4 is a hydraulic circuit diagram illustrating the essential portions of the construction for engaging the forward clutch C1 in the hydraulic control device of the automatic transmission.

A primary regulator valve 53 is controlled by a line pressure control solenoid 52, and adjusts an original pressure generated by the oil pump 12 to the line pressure PL. The line pressure PL is lead to a manual valve 54. The manual valve is mechanically connected with a shift lever 44. Here, the line pressure PL is communicated to the forward clutch C1 side when a forward position, such as a D position, a first (L) position or a second position in manual transmission is selected.

A large orifice 56 and a switching valve 58 are interposed between the manual valve 54 and the forward clutch C1. The switching valve 58 is controlled by a solenoid 60, and the switching valve 58 selectively conducts or shuts off oil which has passed through the large orifice 56 to the forward clutch C1.

A check ball 62 and a small orifice 64 are provided so as to bypass the switching valve 58. When the switching valve 58 is shut off by the solenoid 60, the oil which has passed through the large orifice 56 reaches the forward clutch C1 via the small orifice 64. The check ball 62 functions such that draining of the hydraulic fluid from the forward clutch C1 is conducted smoothly.

An accumulator 70 is disposed in an oil passage 66 between the switching valve 58 and the forward clutch C1 via an orifice 68. The accumulator 70 is provided with a piston 72 and a spring 74, and functions such that the oil supplied to the forward clutch C1 is maintained at a predetermined hydraulic pressure, which is determined by the spring 74, for a while. This reduces shock generated upon engagement of the forward clutch C1.

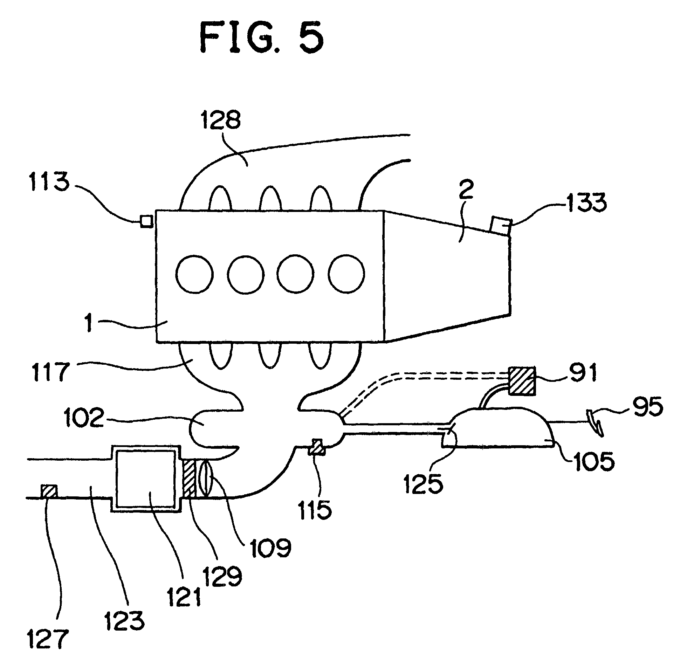

Next, the flow of air and the state of pressure in the intake and exhaust systems of the engine and in the brake system will be described with reference to Fig. 5.

The engine 1 is connected to the automatic transmission 3 via the crankshaft 1a (not shown in Fig. 5). Air is taken in from an air intake port 123. Then, impurities (dirt, dust, and the like) are removed from the air via an air cleaner 121 to make the air fresh. Then, the air is sent to a surge tank 102 which prevents pulsation of the air. Specific volume of intake air to the engine is adjusted by a throttle valve 109.

Air which has been sent to the surge tank 102 is then supplied to the engine 1 via an intake manifold 117. Further, the pressures of the surge tank 102 and the intake manifold 17 are detected by a surge tank pressure (intake pressure) sensor 115 disposed on the surge tank 102 almost accurately. Further, an engine rotational speed sensor 113 is provided on the engine 1. An air flow meter 129 for detecting the specific volume of intake air is disposed at an air intake port 123.

The surge tank 102 is connected to a brake booster 105 via a brake booster valve 125 as well as to the intake manifold 117. A brake booster negative pressure sensor 91 for detecting the pressure PB inside the brake booster 105 is provided to the brake booster 105.

Further, an atmospheric pressure sensor 127 for detecting an atmospheric pressure PA is provided on the outside of the air intake port 123.

A vehicle speed sensor 133 for generating number of output pulses proportional to the rotational speed of the output shaft of an automatic transmission 2, that is, the vehicle speed, per unit time is attached to the automatic transmission 2.

Further, exhaust gas from the engine is exhausted from an exhaust manifold 128.

The brake system of this vehicle is provided with known brake assist means of a vacuum booster type, which generates assist force for the foot brake using negative pressure of the intake manifold of the engine 1 as the boost energy. The negative pressure is detected by the brake booster negative pressure sensor 91.

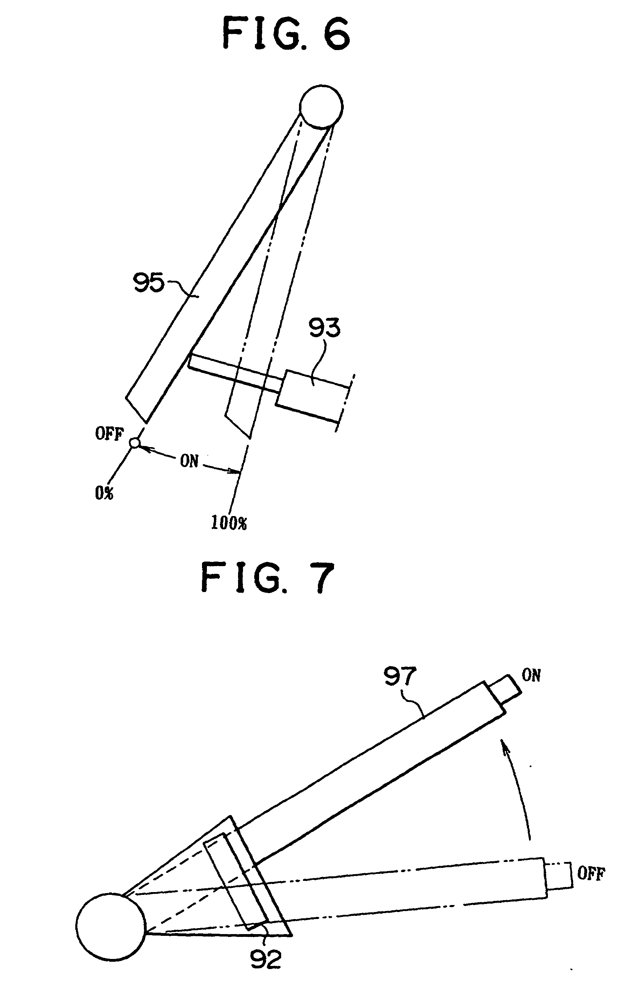

Further, the brake system of this vehicle is, as shown in Fig. 6, provided with a foot brake sensor 93 for detecting pedal stroke (or pedal effort) of a foot brake pedal 95. The foot brake sensor 93 generates ON signals when the foot brake pedal 95 is depressed by the driver, and detects the pedal stroke (or pedal effort) of the foot brake pedal 95 linearly.

For example, the foot brake sensor 93 is OFF when the depression value (or pedal effort) is 0% (completely released), but the foot brake sensor 93 is ON when the depression value (or pedal effort) exceeds 0% (with slightest depression). Signals corresponding to the depression value (or pedal effort) are output thereafter.

A parking brake system of this vehicle is, as shown in Fig. 7, provided with a parking switch 92 for detecting whether a parking brake lever 97 is applied or released. The parking brake switch 92 is ON when the parking brake lever 97 is applied and is OFF when the parking brake lever 97 is released. A parking brake lever angular position sensor, a parking brake lever applied pressure sensor, a parking brake lever stroke sensor, and the like may be substituted for the parking brake switch 92.

Next, an operation of a drive system of a vehicle provided with the above-mentioned automatic engine stop control device will be explained.

Upon engine start, the clutch 2 is engaged, and the motor generator 6 is driven to start the engine 1 (The cases where the starter is employed together with the motor generator, or the starter is employed independently will not be described herein). At this time, the rotation of the motor generator 6 is transmitted from the sun gear 7 side of the deceleration device 5 to the carrier 8 side being decelerated on the way, when the brake 10 is applied. This ensures sufficient value of driving force for cranking the engine 1, even when capacities of the motor generator 6 and the inverter 31 are made small. After the engine 1 is started, the motor generator 6 serves as a generator. The motor generator 6 stores electric energy in the battery 32 when braking the vehicle, for example.

When the engine is started, the controller 33 detects a rotational speed of the motor generator 6, and outputs to the inverter 31 switching signals so that the rotation of the motor generator 6 yields torque and rotational speed necessary for starting the engine 1. For example, if the air conditioner switch 51 signal is on during the engine start, a larger torque is needed than in a case where the air conditioner is off. Consequently, the controller 33 outputs switching signals such that the motor generator 6 rotates at a larger torque and a faster rotational speed.

When predetermined engine stop conditions are met while the eco-run mode signals are on, the controller 33 outputs signals for stopping fuel supply to the engine 1 to automatically stop the engine. Eco-run mode signals are input to the controller 33 by depressing of an eco-run switch 40 provided in a vehicle compartment.

Four automatic engine stop condition, for example, can be set for the eco-run mode, which include,

(a) the foot brake is ON
(b) the vehicle speed is zero
(c) the accelerator is OFF
(d) the state of charge SOC of the battery is sufficient,

and the automatic engine stop is permitted when all of the conditions are met. However, conditions (e) through (k) described below may be added to the above-mentioned four conditions, and the automatic engine stop may be permitted when some or all of the conditions (e) through (k) are met.

The additional conditions may include:

(e) the engine is being started;
(f) a cancel switch (SW) for automatic engine stop control is off (the eco-run switch 40 is on);
(g) sufficient brake negative pressure is secured;
(h) air conditioning performance is good;
(i) confirmation of driving record;
(j) the engine rotational speed NE is equal to an idle speed; and
(k) the shift position is at neutral (N).

Here, the condition (d), the state of charge SOC of the battery is sufficient, is required because running out of the battery may occur when the automatic engine stop control is started in a state where the state of charge SOC of the battery is insufficient. Further, in a case where the system is of a type wherein the engine is restarted when the state of charge SOC of the battery has decreased, the engine is restarted immediately after an automatic stop of the engine due to decrease in the state of charge SOC of the battery. This also becomes a factor for making a driver feel unpleasant, while putting burden on starting systems. Therefore, the state of charge of the battery being sufficient is included in the automatic engine stop conditions.

Now, other conditions will be described. The conditions (b), (e), and (j) refer to a state where the engine rotational speed is at idle speed and the vehicle is in a stopped state (vehicle speed is zero). Further, air conditioning performance is good referred to in condition (f) is for determining whether the temperature and humidity inside the vehicle is adequate. That is, there is a possibility of making the driver feel unpleasant if the engine is automatically stopped when the air conditioning is inadequate.

The above-mentioned condition (k) is not limited to an "N" position in case of a system where the automatic stopping of the engine is implemented at a driving position. Also, in a case of a manual transmission (MT), the condition (k) may be replaced by the shift position being "N" and the driver's foot being removed from the clutch pedal.

The "confirmation of driving record" referred to in the above-mentioned condition (i) is a determination of a current state of the vehicle.

That is, it is determined that a vehicle is being parked in a garage (so-called garage shift) when the shift position is repeated between an "N" and an "R", and it is controlled such that the automatic stop control of the engine is not entered immediately. Further, the driving record is confirmed in such cases as when various oil temperatures are low in a period immediately after engine start, or when the oil temperature is significantly high due to high speed running and high speed rotation of the engine, because an appropriate automatic stop control is sometimes not possible in such cases.

Further, when these conditions have continued for a predetermined time Tstop may be added to the aforementioned conditions. The predetermined time Tstop is counted by a timer, and is inputted to the ECU 50 to be processed. The predetermined time Tstop is equivalent to a time it takes for starting an automatic stopping of the engine. The predetermined time Tstop may be changed and set according to circumstances. The predetermined time Tstop may be set to zero, such that the automatic stopping of the engine is implemented as soon as predetermined stop conditions are met. Also, the predetermined time Tstop may be set to infinity such that the automatic stopping of the engine is substantially inhibited.

Further, as prerequisite for determining whether the automatic stop conditions are met, it is checked whether the sensors are operating normally, the engine water temperature is equal to or greater than a predetermined value, the AT fluid temperature is equal to or greater than a predetermined value, the shift position sensor is operating normally, and the like.

The controller 33 restarts the engine 1 when predetermined engine restart conditions are met in a state where the engine is automatically stopped. Restart conditions include, for example, non-establishment of at least one of the above-mentioned stop conditions.

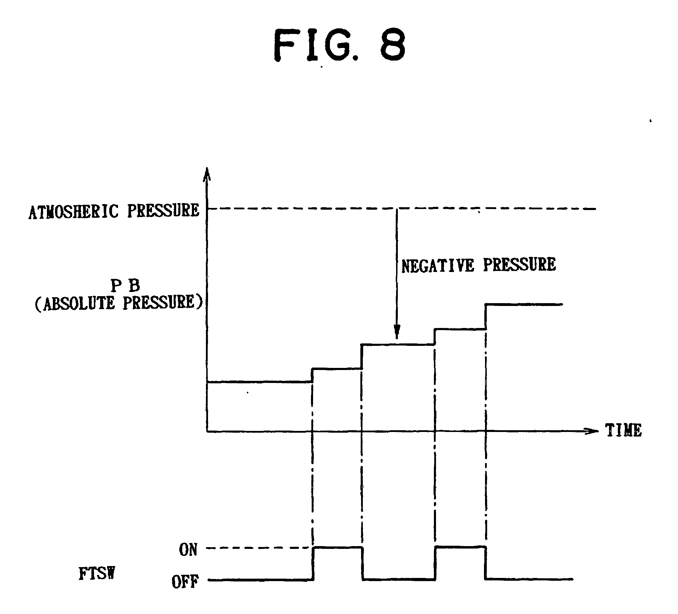

In a vehicle wherein the automatic stopping of the engine is conducted, it is difficult to secure negative pressure for the surge tank 102, which serves as an energy source for the brake booster 105, because the engine is stopped frequently. Fig. 8 is a time chart illustrating an example of behaviors of foot brake signals FTSW and brake booster pressure PB during engine stop. As shown in this figure, the brake booster pressure PB is increased, that is, the negative pressure is decreased, every time the brake pedal is activated. As a result, the brake assist performance of the brake booster 105 is deteriorated, thus deteriorating the operability of the brake pedal 95.

Therefore, according to the present invention, the deterioration of the brake assist performance of the brake booster 105 is prevented by detecting the brake booster pressure PB with the brake booster negative pressure sensor 91, and the intake negative pressure of the engine is restored by restarting the engine, when the brake booster internal pressure is increased to a value equal to or greater than a predetermined value (that is, when the negative pressure is decreased to a value equal or less than a predetermined value) during engine stop.

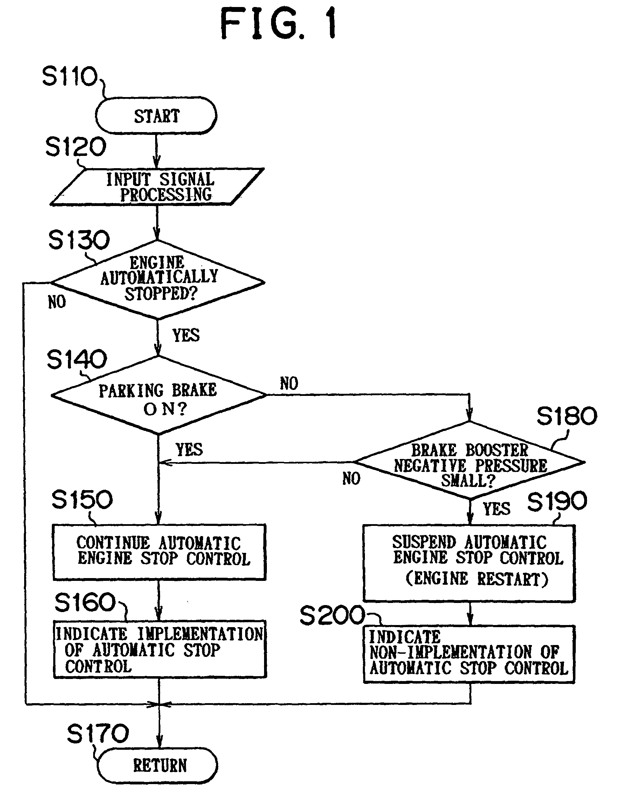

Fig. 1 is a flowchart illustrating procedures for processing an automatic engine stop and restart control routine according to the present embodiment. This routine is conducted by the ECU 50 in a predetermined time cycle so as to start the engine to prevent the deterioration of the brake booster function, as described above.

The control shown in this flowchart is entered from a start step 110. Various input signals are processed in step 120, and it is determined in step 130 whether the engine is under automatic stop control. Conditions for starting the automatic stop control include, for example, whether all of the aforementioned four conditions (a) through (d) are met.

If the engine is not under automatic stop control, the process proceeds to a return step 170. If the engine is under automatic stop control, it is determined in step 140 whether the parking brake is on. If the parking brake switch is on, decrease in assist force of the foot brake will not be of a particular problem, because brakes are applied by the parking brake. Therefore, when the parking brake is on, the process proceeds to step 150 to continue the automatic engine stop control. In step 160, the automatic engine stop control implementation indicator is lit to inform an user of the fact. Then, the process proceeds to the return step 170.

On the other hand, when the parking brake is off, it is necessary to check whether the assist force of the foot brake has decreased by automatic stopping of the engine, because the vehicle is braked by the foot brake alone. Accordingly, the process proceeds to step 180, and it is determined whether the negative pressure of the brake booster has become equal to or less than a predetermined value. That is, the engine is not restarted even when the foot brake pedal 95, shown in Fig. 5, is depressed or returned as far as the foot brake sensor 92 signal is on (that is, the foot brake pedal 95 is not completely released), because the restart conditions are not met. However, because the supply of negative pressure is stopped by stopping of the engine, repeated operations of the foot brake pedal 95 consumes the negative pressure of the brake booster, possibly leading to insufficient allowance of brake assist force. Therefore, decrease in negative pressure of the brake booster is checked. In the first embodiment, decrease in the negative pressure is directly detected by the brake booster negative pressure sensor 91.

If it is determined that the negative pressure is equal to or greater than a predetermined value, the automatic engine stop control is continued in step 150. However, when the negative pressure becomes less than the predetermined value, it is determined that the brake assist force has decreased. Then, the process proceeds to step 190 to restart the engine by suspending the automatic engine stop control. Accordingly, the negative pressure is restored, and decrease in the brake assist force is avoided in advance. Then, in step 200, an automatic stop control non-implementation indicator is lit to inform the user of the fact that the automatic stop control has been suspended.

Next, controls implemented when restarting the engine 1 from automatically stopped state will be briefly described.

In a vehicle wherein such automatic engine stop control is implemented, the engine needs to be immediately restarted when predetermined restart conditions are met such as by depressing of the accelerator pedal 95 by a driver, showing the intent of the driver to run the vehicle.

However, in a case where the automatic transmission is of a hydraulic type, an oil pump connected to the engine is also stopped when the engine is stopped. Consequently, the oil supplied to the forward clutch of the automatic transmission is drained from the oil path, for example, leading to decrease in hydraulic pressure. Accordingly, the forward clutch, which is supposed to be engaged when running forward, is disengaged upon restarting of the engine.

In this case, if the forward clutch is not quickly engaged upon engine restart, the accelerator pedal is depressed in a neutral state. This may lead to an engagement shock due to the engagement of the forward clutch at a relatively high engine rotational speed resulting from a blown up engine.

Therefore, a control is conducted to avoid such state, that is, to engage the clutch of the automatic transmission to be engaged upon engine restart quickly without generating an engagement shock. The content of the control conducted will be described in detail.

In this restart control, the engine is restarted when predetermined restart conditions are met. To engage the forward clutch as quickly as possible, a quick pressure increase control is implemented at an initial stage of oil supply to the forward clutch.

To be specific, it is programmed such that the quick pressure increase control is implemented for a predetermined time including zero, at beginning of oil supply. Further, the predetermined time is changed and decided according to oil drain value from the oil passage of the clutch or oil temperature of the automatic transmission. The execution time of the quick pressure increase control is changed according to the oil drain value or the oil temperature, because the engine rotational speed is already increasing when the clutch is engaged, and a large engagement shock may be caused upon engagement of the clutch, if the quick pressure increase control is not implemented properly.

Especially, the execution time of the quick pressure increase control is changed according to the oil drain value, because the clutch is immediately engaged if the quick pressure increase control is implemented in a state where the oil has not been completely drained from the oil passage of the clutch, as in a case of restarting the engine immediately after the engine is stopped, for example, resulting in generation of a large shock.

Also, the execution time is changed according to the oil temperature, because the viscosity of the oil differs according to the oil temperature. Therefore, a same execution time does not result in a same oil supply.

Further, the "quick pressure increase control" herein refers to increasing of the oil supply speed per unit time for a predetermined clutch. The quick pressure increase control may be constructed by, for example, temporarily slackening a throttling degree of a throttling passage in the oil passage to the clutch, supplying oil, as necessary, to the clutch via a bypass passage provided to the throttling passage, or setting a pressure adjusting value of the primary regulator valve (valve for adjusting the line pressure) at a higher level temporarily.

In Fig. 4, when the engine is restarted, the oil pump 12 starts rotating. Thus, the oil is supplied to the primary regulator valve 53 side. The line pressure adjusted by the primary regulator valve 53 is supplied to the forward clutch C1 via the manual valve 54.

Here, when the solenoid 60 is controlling the switching valve 58 at an open state in accordance with the command to implement the quick pressure increase control from the controller 7, the line pressure PL which has passed through the manual valve 54 passes through the large orifice 56, then the line pressure PL is directly supplied to the forward clutch C1. Further, at this state where the quick pressure increase control is executed, the accumulator 70 does not function due to the setting of the spring constant of the spring 74.

When the solenoid 60 shut-off controls the switching valve 58 upon receiving from the controller 7 a command for terminating quick pressure increase control, the line pressure PL which has passed through the large orifice 56 is supplied to the forward clutch C1 comparatively slowly via a small orifice 64. Also, at this stage, the hydraulic pressure supplied to the forward clutch C1 is considerably high. Accordingly, the hydraulic pressure of the oil passage 66, which is connected to the accumulator 70, moves the piston 72 upward as shown in the figure against the spring 74. As a result, the increase in the hydraulic pressure supplied to the forward clutch C1 temporarily slackens while the piston 72 is moving, thereby enabling a significantly smooth engagement of the forward clutch C1.

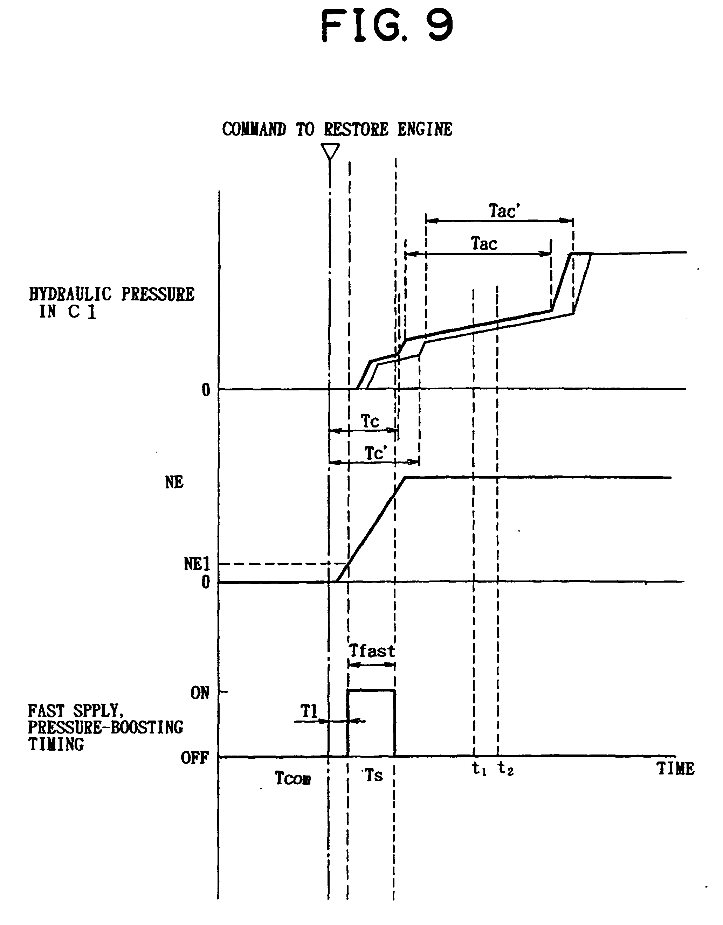

Fig. 9 shows the hydraulic supply characteristics of the forward clutch C1. In Fig. 9, a thin line indicates a case where the quick pressure increase control has not been implemented, whereas a bold line indicates a case where the quick pressure increase has been implemented. Also, a portion defined as Tfast indicates a period (a predetermined period) for executing the quick pressure increase control. The period Tfast qualitatively corresponds to a period at which a piston (not shown) of the forward clutch C1 loads a so-called clutch pack, and the engine speed NE corresponds to a period slightly before reaching a predetermined idle speed. Tc and Tc' correspond to a time taken to load the clutch pack of the forward clutch C1, and Tac and Tac' corresponds to a time taken while the accumulator 70 is functioning.

If the quick pressure increase control is not implemented, because the oil is supplied by a route bypassing the switching valve 58, considerably long time Tc' lapses before the clutch pack of the piston of the forward clutch C1 is loaded. Then, the engagement goes through a course as shown by the thin line in the figure, and the engagement is terminated at around time t2. However, in the present embodiment, the engagement of the forward clutch C1 may be terminated at around time t1 with a small shock, because the quick pressure increase control is implemented for an appropriate time Tfast.

As apparent from Fig. 9, the start timing Ts for the quick pressure increase control is set when the engine speed (= rotational speed of the oil pump 12) NE becomes a predetermined value NE1. In other words, the quick pressure increase control is triggered by the engine speed NE having become greater than the predetermine value N1.

The quick pressure increase control is not started concurrently with a restart command Tcom of the engine. Moreover, the start timing is not set by the timer, but instead, the start timing is set by the engine speed NE. This is because it is possible that the time T1 taken from the state where the rotational speed of the engine 1 is zero to the state where it slightly starts (to reach the value of about NE1) greatly varies depending on the driving conditions.

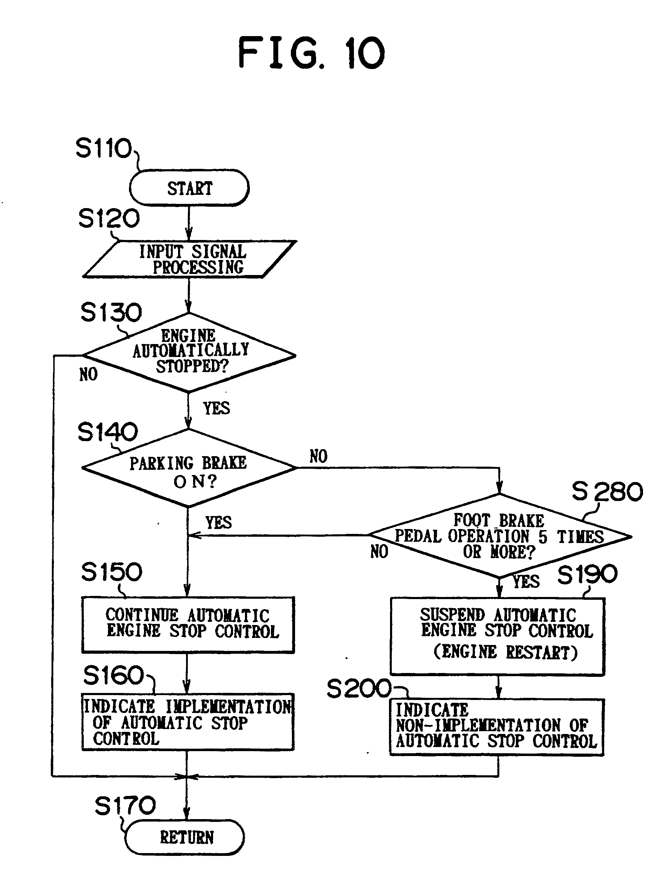

A second embodiment of the present invention will be described with reference to the flowchart in Fig. 10. In the aforementioned first embodiment, the decrease in the brake assist force was determined by directly detecting the negative pressure of the brake booster. However, this creates a problem of cost increase, because a brake booster presser sensor 52 has to be provided. Therefore, in the second embodiment, the number of depression and returning of the brake pedal 95 (number of pumping operation of the brake), in a range where the foot brake sensor 93 is on (in a range where the foot brake pedal 95 is not completely released), is counted. If the number reaches a predetermined value, it is determined that the negative pressure of the brake booster has decreased. Accordingly, the engine is started to restore the intake negative pressure of the engine.

That is, because the negative pressure of the brake booster is known to decrease by repeated depression and returning of the foot brake pedal 95, the number of pedal operation is counted, such that when the counted value reaches 5, for example, it is determined that there is no allowance to the brake assist force due to decrease in negative pressure. Therefore, the second embodiment is constructed by replacing step 180 in Fig. 1 by step 280 in Fig. 10. All other steps remain the same.

Further, the engine is restarted regardless of the counted value when the foot brake sensor 93 is off (completely released), because the restart conditions are considered to have been met.

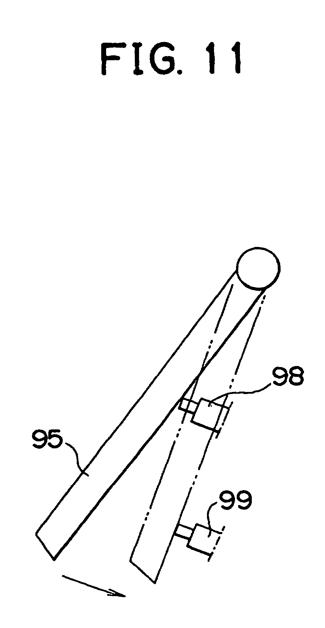

In the aforementioned embodiment, a foot brake sensor 93 is provided to the foot brake pedal 95 for detecting the pedal stroke or pedal effort linearly. However, another brake sensor construction may also be adopted. As shown in Fig. 11, two types of sensors can be provided, i.e. an upper foot brake pedal position sensor (hereinafter referred to as the "upper brake sensor") 98 which turns on and off at a stage where the depression value of the foot brake 95 is small (light or shallow) and a lower foot brake pedal position sensor (hereinafter referred to as the "lower brake sensor") 99 which turns on and off at a stage where the depression value of the foot brake pedal 95 is large (strong or deep). Signals from these sensors are input to the aforementioned ECU 50.

One of the automatic engine stop conditions, the foot brake is on, is determined based on the signals from the upper brake sensor 98. The pumping operation of the foot brake pedal while the engine is automatically stopped is determined based on the signals from the lower brake sensor 99.

In the first or the second embodiment, the case where the condition "the foot brake is on", is included in the automatic engine stop conditions was described. The condition, "the foot brake is on", may be replaced by "the parking brake is on". In that case, the engine is restarted when the parking brake is turned off in a state where the engine has been automatically stopped because releasing of the parking brake fulfills the restart conditions. However, there is a possibility that sufficient assist force cannot be obtained, even when the foot brake is depressed, until the engine has been rotated completely so that negative pressure is generated.

Therefore, in the present embodiment, a decrease in the assist force is determined by detection of brake booster negative pressure as in the first embodiment, or by detection of number of foot brake pedal operation as in the second embodiment, such that the engine is restarted based on the determination result. This ensures supply of negative pressure, by restarting of the engine, before anything is actually affected by the decrease in the assist force. Accordingly, disagreeableness in the operation of the foot brake can be eliminated.

Next, a third embodiment of the present invention will be described. The third embodiment is for realizing automatic restart control of the engine in order to prevent deterioration of the brake booster function, as in the case with the first embodiment. However, the procedure of the control routine for implementing automatic restart control of the engine according to the detected brake booster pressure is different from the procedure for first embodiment shown in Fig. 1.

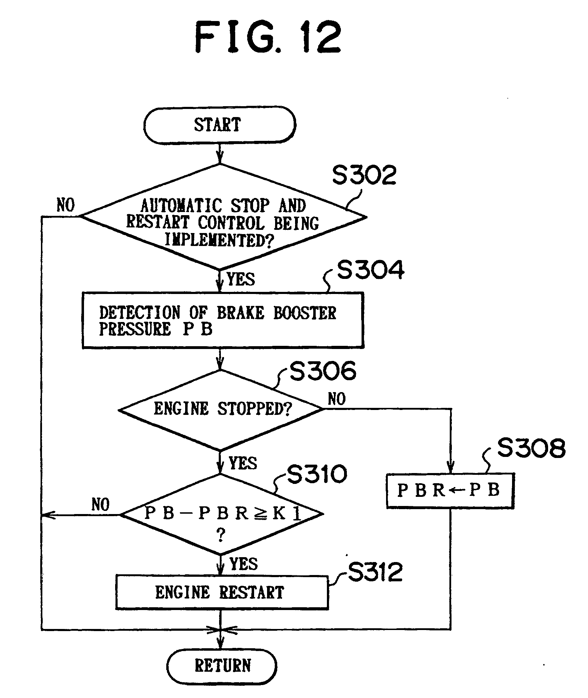

Fig. 12 is a flowchart illustrating procedures for a control routine according to the third embodiment. This control routine is conducted by the automatic stop and restart ECU 50 in a predetermined time cycle, so as to realize an engine start for the prevention of deterioration of the brake booster function as described already.

First, in step 302, it is determined whether the automatic stop and restart control is being executed. If the automatic stop and restart control is not being executed, the present routine is terminated. If the automatic stop and restart control is being executed, the process proceeds to step 304. In step 304, a brake booster pressure PB is detected based on output from the brake booster negative pressure sensor 91. Next, in step 306, it is determined whether the engine is being stopped based on the rotational speed signal NE. If the engine is not being stopped, the process proceeds to step 308. If the engine is being stopped, the process proceeds to step 310. In step 308, the detected brake booster pressure PB is stored as a brake booster pressure PBR immediately before engine stop.

On the other hand, in step 310, it is determined whether "PB - PBR" is equal to or greater than a predetermined value K1. If PB - PBR < K1, the present routine is terminated. If PB-PBR $\geq$ K1 , that is, when it is determined that the brake booster pressure has increased (in other words, negative pressure has decreased) from several times of brake operation during engine stop, the process proceeds to step 312 to start the engine. That is, sufficient value of surge tank negative pressure or the brake booster negative pressure is secured by restarting of the engine. Further, 0,53bar (400mmHg), for example, is adopted as K1.

Next, a fourth embodiment of the present invention will be described. In the fourth embodiment, as in the case with the second embodiment, the brake booster negative pressure is not directly detected by the sensor, but instead, decrease in the brake assist force is determined based on the number of operations of the foot brake pedal 95. However, the procedure of the control routine for implementing automatic restart control of the engine according to the detected number of brake operation is different from the procedure for second embodiment shown in Fig. 10.

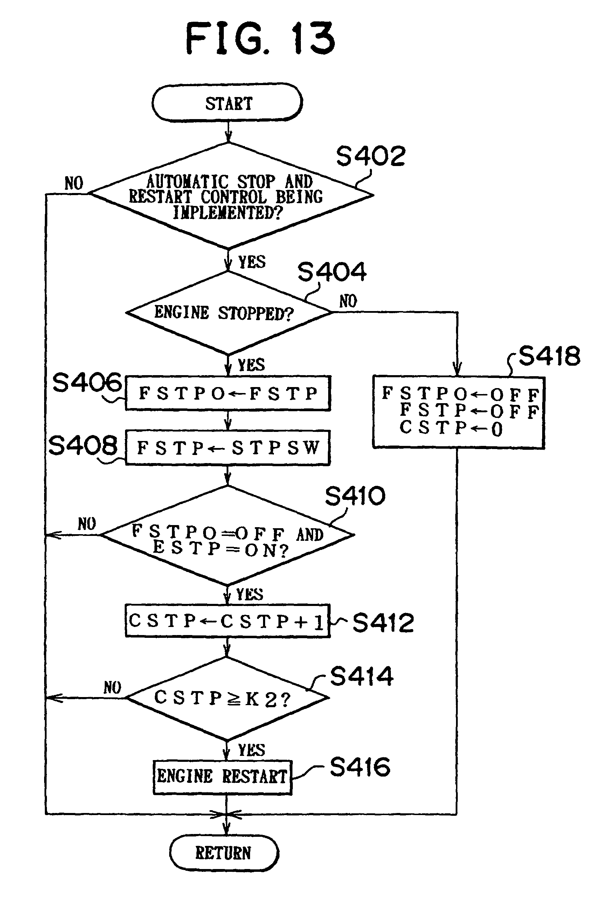

Fig. 13 is a flowchart illustrating the procedures for a control routine according to the fourth embodiment of the present invention. The present routine is executed by the ECU 50 in a predetermined time cycle. First, in step 402, it is determined whether the automatic stop and restart control is being executed. If the automatic stop and restart control is not being executed, the present routine is terminated. If the automatic stop and restart control is being executed, the process proceeds to step 404. In step 404, it is determined whether the engine is being stopped based on the rotational speed signal NE. If the engine is not being stopped, the process proceeds to step 418. If the engine is being stopped, the process proceeds to step 406.

In step 406, the content of flag FSTP set by previous run of present routine is stored as FSTPO. The flag FSTP, as shown in the next step 408, takes in the signals from the foot brake sensor 93. Next, in step 410, it is determined whether "FSTPO = OFF and FSTP = ON" is established, that is, whether an operation state of the brake pedal 95 has changed from off to on. If the determination result is NO, the present routine is terminated.

On the other hand, if the determination result is YES in step 410, the process proceeds to step 412.

In step 412, a counter CSTP for counting the number of brake operations is incremented. Next, in step 414, it is determined whether CSTP is equal to or greater than a predetermined number K2. If CSTP< K2, the present routine is terminated. If CSTP $\geq$ K2, that is, when it is determined that the brake booster pressure has increased (in other words, negative pressure has decreased) from "K2" times of brake operations during engine stop, the process proceeds to step 416 to start the engine. Here, as shown in Fig. 8, the increase of brake boost pressure (decrease of negative pressure) caused by brake operation is substantially determined by vehicle model. Therefore, the criterion value K2, which is usually several times, is to be conformed to each vehicle model by experiment.

In step 418, which is implemented when it is determined in step 404 that the engine is not being stopped, the aforementioned flag FSTPO and FSTP are set to be OFF. Also, the counter CSTP is initialized and the present routine is terminated.

Next, a fifth embodiment of the present invention will be described. In the fifth embodiment, a vehicle is determined to be running on a descending slope which surely requires a brake assist, when a vehicle speed equal to or greater than a predetermined value is detected for a predetermined time or more during engine stop. Accordingly, the engine is started to ensure engine intake negative pressure which serves as a base for brake booster negative pressure.

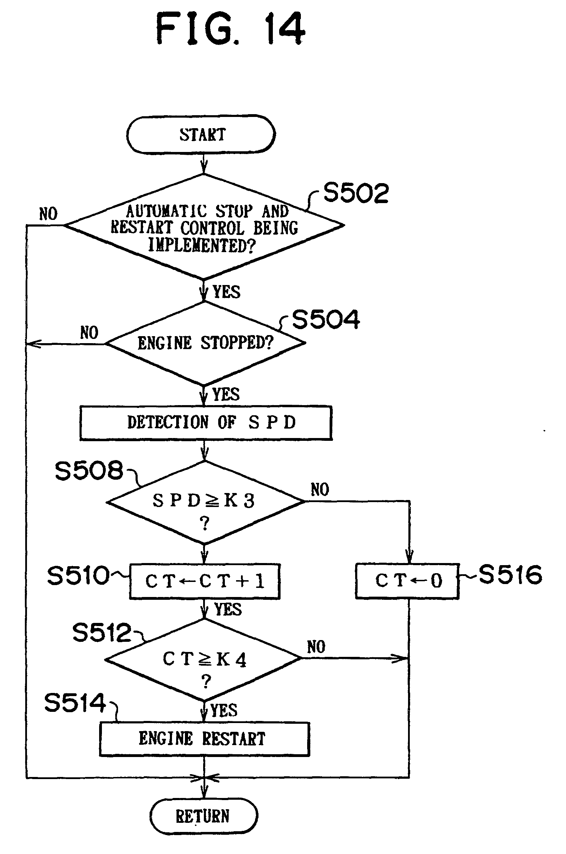

Fig. 14 is a flowchart illustrating the procedures for a control routine according to the fifth embodiment of the present invention. The present routine is executed by the ECU 50 in a predetermined time cycle. First, in step 502, it is determined whether the automatic stop and restart control is being executed. If the automatic stop and restart control is not being executed, the present routine is terminated. If the automatic stop and restart control is being executed, the process proceeds to step 504. In step 504, it is determined whether the engine is being stopped based on the rotational speed signal NE. If the engine is not being stopped, the present routine is terminated. If the engine is being stopped, the process proceeds to step 506.

In step 506, a vehicle speed SPD is detected based on the output from the vehicle speed sensor 133. Next, in step 508, it is determined whether the vehicle speed SPD is equal to or greater than a predetermined value K3. A predetermined appropriate value is adopted as the value for K3. If SPD < K3, the process proceeds to step 516, and the counter CT for measuring the time during which the vehicle speed is maintained at K3 or greater is initialized. Then, the present routine is terminated.

On the other hand, if SPD $\geq$ K3, the process proceeds to step 510, and the counter CT for measuring the time during which the vehicle speed of K3 or greater is maintained is incremented. Next, in step 512, it is determined whether the counter CT is equal to or greater than a predetermined value K4. A value corresponding to approximately 3 seconds, for example, is adopted as the value for K4. If CT< K4, the present routine is terminated. On the other hand, if CT ≥ K4, the process proceeds to step 514. In step 514, the vehicle is determined to be running on a descending slope when vehicle speed of K3 or greater is detected for a predetermined time K4 during engine stop. Accordingly, the engine is started. Then, the present routine is terminated.

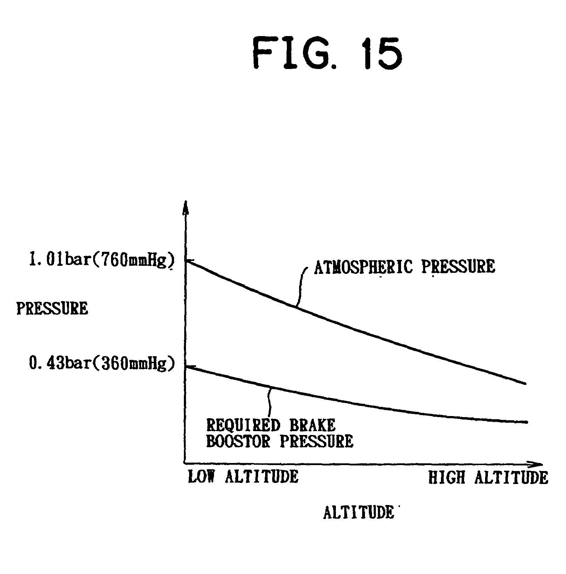

In the aforementioned third, fourth, and fifth embodiments, the criterion values K1, K2, K3, and K4 are constants. However, the criterion values may be variables which correspond to driving state. For example, as shown in Fig. 15, the brake booster negative pressure to be secured changes if a vehicle is running at a high altitude, due to decrease in atmospheric pressure. Therefore, for example, in a case where the atmospheric pressure is detectable in the aforementioned sixth embodiment, the criterion value K1 may be varied according to the atmospheric pressure.

Next, a sixth embodiment will be described.

In the sixth embodiment, to determine whether a brake negative pressure sufficient for implementing brake assist is secured, the brake booster internal pressure PB is detected by the brake booster negative pressure sensor 91 and the atmospheric pressure PA is detected by the atmospheric pressure sensor 127. Then, the atmospheric pressure PA and the aforementioned brake booster internal pressure PB are compared.

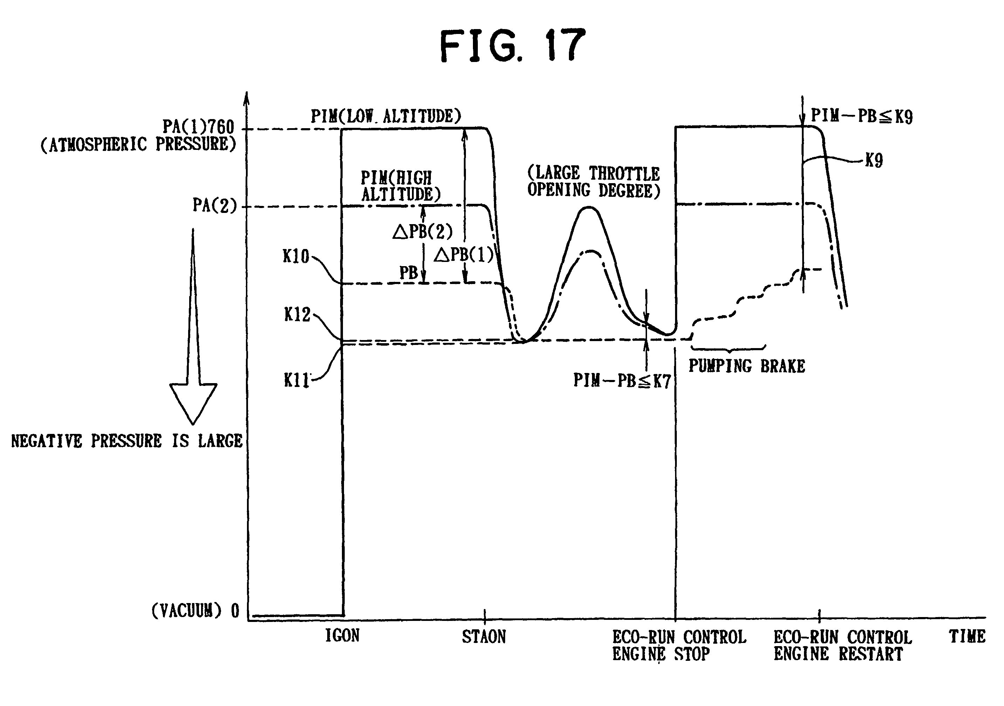

This will be descried in detail with reference to Fig. 17.

Fig. 17 illustrates a relationship between intake pressures PIM when the vehicle is at high and low altitudes, and the brake boost pressure PB.

Immediately after an ignition IG is turned on, the intake pressure PIM (surge tank internal pressure) becomes a comparatively high atmospheric pressure PA(1) at low altitude, and the intake pressure PIM becomes an atmospheric pressure PA(2) slightly lower than the atmospheric pressure PA(1) at high altitude. The brake booster pressure PB at this time is maintained at a value K10 which is closer to vacuum (greater negative pressure) than the atmospheric pressure PA (1) by ΔPB, for example. After the engine is started (STAON), the intake pressures PIM for both low and high altitudes become a certain value K11. The brake boost pressure PB decreases (negative pressure increases) with a slight delay in time with respect to decrease in the intake pressure PIM, and the value of the brake boost pressure PB becomes a predetermined value K12 which is slightly lower (smaller) than the predetermined value K11 of the aforementioned intake pressure PIM after engine start.

As shown in Fig. 17, when the throttle opening degree VTA is widened, the intake pressures PIM for both low and high altitudes become closer to the atmospheric temperature. However, the brake boost pressure PB is substantially maintained at the predetermined value K12 by closing the brake booster valve 125.

Next, when the throttle is closed, the intake pressures PIM for both low and high altitudes become closer to the vacuum side (predetermined value K11).

In the sixth embodiment, the intake pressure PIM and the brake internal pressure (brake boost pressure) PB are compared, as a condition for entering the automatic stop control of the engine. The aforementioned automatic stop of the engine is permitted only when a difference between the intake pressure PIM and the brake booster internal pressure PB becomes smaller than a predetermined value K7.

The intake pressure PIM and the brake booster internal pressure PB are compared in order to determine whether negative pressure sufficient for surely keeping the vehicle at a stopped state is secured by the brake booster internal pressure PB.

Circumstances (A) through (E) were taken notice of.

(A) As apparent from the characteristics shown in Fig. 17, a predetermined large difference ΔPB(1) or ΔPB(2) exists between the intake pressure PIM and the brake booster internal pressure PB. However, when the engine is in operation, the intake pressure PIM becomes closer to the predetermined value K11 (in a state where the throttle is closed), and the brake booster internal pressure PB decreases along with the decrease in intake pressure PIM down to K12 which is close to K11.

(B) When the throttle is opened, the intake pressure increases, but the brake booster internal pressure does not increase rapidly. This is because, the brake pedal is generally not depressed when the throttle is open, which means that the negative pressure of the brake booster internal pressure will not be consumed. Therefore, in such case, the difference between the intake pressure PIM and the brake booster internal pressure PB becomes large even when sufficient negative pressure is secured by the brake booster internal pressure PB.

(C) On the other hand, when the throttle is closed subsequently, the intake pressure PIM decreases again. Accordingly, the difference between the intake pressure PIM and the brake booster internal pressure PB becomes small.

(D) Cases where the difference between the intake pressure PIM and the brake booster internal pressure PB is small even when the brake booster internal pressure is not secured are distinct cases, such as when the brake pedal is pumped while the throttle is open, or the like.

(E) The engine is automatically stopped only when the throttle is completely open.

Taking into consideration the circumstances (A) through (E) above, it may be estimated that the negative pressure of the brake booster internal pressure PB is sufficiently secured when the difference between the intake pressure PIM and the brake booster internal pressure PB is small during engine operation. In other words, the engine may be automatically stopped.

Further, a comparison between the intake pressure (surge tank internal pressure) PIM and the brake booster internal pressure PB may be performed, for example, as shown by a formula below.

$$PIM-PB \leq K7 \qquad (1)$$

Or, PIM-PB may be replaced by $\Delta$PB to obtain

$$\Delta PB \leq K7 \qquad (2)$$

Here, K7 is a predetermined constant.

Further, in a case where an intake pressure (surge tank pressure) sensor 115 is not provided, a value PIMC calculated from output value from the air flow meter and the engine speed NE, may be used to obtain a formula,

$$PIMC-PB \leq K7 \qquad (3)$$

for calculating the difference.

Here, comparison is made using the difference between values as an example. However, a ratio, as shown in the formula below, may be used for the comparison.

$$PIM/PB \leq K'7 \qquad (4)$$

Here, K'7 is a predetermined constant close to 1. Further, comparison may be made using a map, or the like.

By comparing the intake pressure PIM and the brake booster internal pressure (negative pressure) PB while the engine is in operation, it may be determined whether the brake booster internal pressure PB has been surely secured. This realizes a sufficient brake assist performance even when the engine stop control is being implemented.

Next, operations of the engine drive unit after automatic stopping of the engine will be described.

Referring back to Fig. 2, the controller 33 outputs control signals for disengaging the clutch 2 after the engine is automatically stopped. Therefore, power is not transmitted between the transmission mechanism 3b and the engine 1. On the other hand, corresponding switching signals are output to the inverter 31 from the controller 7 such that the motor generator 6 rotates at a torque which takes into consideration the loads from a power steering unit pump and an air conditioner compressor, in order to keep an air conditioner and a power steering unit activated even when the engine 1 is stopped.

Pressure inside the intake manifold 117 and the surge tank 102 becomes close to the atmospheric pressure after the engine is stopped. That is, in the present embodiment, in order to keep the brakes in applied state even after the engine 1 has been stopped, the brake booster valve 125 is closed after the automatic engine stop command is given so as to secure and maintain the negative pressure inside the brake booster 105. However, the negative pressure decreases gradually with lapse of time or the negative pressure decreases by pumping of the brake pedal.

Now, referring back to Fig. 17, a second characteristic of the present invention will be described in detail.

After the engine is stopped, in a case where the brake pedal is depressed and released for several times (so-called pumping operation) or by lapse of a certain value of time after the engine stop, the pressure (negative pressure) inside the brake booster 105 is no longer maintained, resulting in a decrease of negative pressure.

When the pressure (negative pressure) inside the brake booster 105 is no longer maintained, there arises a problem of duly decrease in brake assist performance.

In the present invention, to eliminate deterioration of brake assist performance, the brake booster internal pressure PB is detected by the brake booster negative pressure sensor 91 and the atmospheric pressure PA is detected by the atmospheric pressure sensor 127 after the engine is stopped. Then, the atmospheric pressure PA and the brake booster internal pressure PB are compared. If the difference between the atmospheric pressure PA and the brake booster internal pressure PB is less than a predetermined value K9, the automatic stopping of the engine is suspended.

In this embodiment, the brake assist function is not confirmed by determination of the brake booster internal pressure PB alone, but the reliability is increased by taking the difference between the brake booster internal pressure PB and the atmospheric pressure PA.

As mentioned already, the brake booster internal pressure PB heads toward atmospheric pressure when the engine is stopped. However, the atmospheric pressure PA(2) at high altitude is considerably lower than the atmospheric pressure PA(1) at low altitude. Because the brake booster internal pressure PB never exceeds the atmospheric pressure PA, the detected brake booster internal pressure PB will be considerably low when a vehicle is running at a high altitude. However, the brake booster can exert its primarily function only when a "differential pressure" between the brake booster internal PB and the atmospheric pressure at that time is secured.

Therefore, in the present embodiment, this "differential pressure" is detected so as to confirm the assist function of the brake booster. Because the differential pressure is more difficult to be secured at higher altitudes, qualitatively, the automatic stopping of the engine tends to be suspended more frequently at higher altitudes.

Further, the comparison between the atmospheric pressure PA and the brake booster internal pressure PB may be made from a following formula.

$$PA - PB \leq K9 \qquad (5)$$

Or, PA (atmospheric pressure)-PB (brake boost internal pressure) may be replaced by $\Delta PB$ (6) to obtain

$$\Delta PB \leq K9 \qquad (7)$$

Further, in a case where an atmospheric pressure sensor 127 is not provided, a value PIMC which is calculated from output value from the air flow meter and the engine speed NE, may be used to obtain a formula,

$$PIMC - PB \text{ (brake boost pressure)} \leq K9 \qquad (8)$$

to calculate the difference.

Here, comparison is made using the difference between values as an example.
However, a ratio, as mentioned earlier, may be used to for the comparison.
For example, a formula shown below may be used.

$$PA/PB \leq K'9 \qquad (9)$$

Also, because the engine is in a stopped state, the comparison between the atmospheric pressure PA and the brake internal pressure PB is the same as the comparison between the internal pressure PIM of the surge tank 102 and the internal pressure PB of the brake booster 105 are the same, in this case.

That is, the atmospheric pressure PA in the above formula (5) can be replaced by the surge tank internal pressure PIM to obtain

$$PIM - PB \leq K9 \qquad (5)'$$

Or, PIM (surge tank internal pressure - PB (brake boost pressure) can be replaced by $\Delta PB'$ (6)' to obtain

$$\Delta PB' \leq K9 \qquad (7)'$$

In a case where the surge tank pressure sensor 115 is not provided, as described earlier, a calculated value PIMC' of the surge tank internal pressure may be adopted to obtain a formula below.

$$PIMC' - PB \leq K9 \qquad (8)'$$

Similarly, the values may be compared by a ratio, using the following formula.

$$PIM/PB \leq K' \qquad (9)'$$

By detecting the decrease in brake booster internal pressure (negative pressure) while the engine is in an automatically stopped state to suspend the automatic engine stop control, sufficient brake boost internal pressure can be secured, thereby preventing deterioration of the brake assist performance.

Further, the predetermined value K9 shall preferably be a limit value taken before the assist performance of the brake booster for assisting the brake operation of a driver is deteriorated.

Further, the engine is restarted, for example, when any one of the aforementioned conditions (a) through (k) is not met.

In the present embodiment, the eco-run mode is entered when the shift position is at a non-driving position, and the eco-run mode is terminated when it is detected that the shifting position has been changed to a driving position. However, the present invention is not limited to this, and it is applicable to a system wherein the eco-run mode is implemented only at driving positions, or a system wherein the eco-run mode is implemented at both the driving and non-driving positions. Further, the present invention is applicable to a manual transmission (MT).

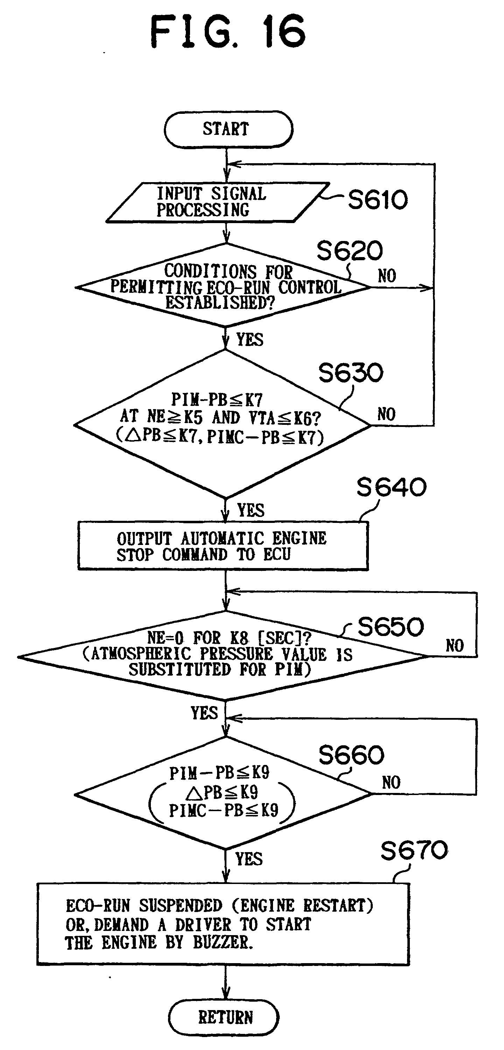

Next, controls performed in the sixth embodiment will be described with reference to a flowchart in Fig. 16.

In Fig. 16, inputs such as the atmospheric pressure PA from the atmospheric pressure sensor 127, the brake boost pressure PB from the brake booster negative pressure sensor 91, the surge tank internal pressure PIM from the surge tank pressure (intake pressure) sensor 115, the throttle opening degree VTA from the throttle opening degree sensor 130, the engine speed NE from the engine rotational speed sensor 113, neutral signals from a shift position sensor 131, a vehicle speed Ve from the vehicle speed sensor 133, and the like are processed by the ECU 50, in step 610.

In step 620, it is determined whether the conditions for permitting the automatic engine stop control are met.

The conditions for permitting the automatic engine stop control are as described earlier. If the automatic stop conditions of the engine are not met in step 620, the process returns to step 610 to process input signals. If the automatic stop conditions are met, the process proceeds to step 630.

In step 630, it is determined whether the engine speed NE is equal to or greater than a predetermined value K5 and whether the throttle opening degree VTA is equal to or less than a predetermined value K6. When these conditions are met, the surge tank internal pressure (intake pressure) PIM and the brake boost internal pressure PB are compared.

If the difference between the surge tank internal pressure (intake pressure) PIM and the brake booster internal pressure PB is equal to or less than a predetermined value K7, the process proceeds to step 640.

Further, ΔPB ≤ K7 and PIMC - PB ≤ K7 may be substituted for this comparison.

If these conditions are not met in step 630, the process returns to step 610 to process input signals. If these conditions are met, the process proceeds to step 640.

In step 640, a command for automatically stopping the engine is output to the ECU 50 and the engine is put to an automatically stopped state.

In step 650, it is determined whether a predetermined time K8 has lapsed since the engine had been automatically stopped. At this time, determination of whether the engine is in an automatically stopped state can be made by detecting if the engine speed NE is zero. The duration of engine stop is detected, because it may be determined that there is a high possibility of pressure (negative pressure) decrease occurring inside the brake booster, after a lapse of the predetermined time K8, for example.

After the predetermined time K8 has lapsed since engine stop, the process proceeds to step 660. Then, the atmospheric pressure PA and the internal pressure PB of the brake booster 105 are compared.

As mentioned earlier, the surge tank internal pressure PIM is approximately equal to the atmospheric pressure PA when the engine is stopped. Therefore, the surge tank internal pressure PIM and the internal pressure PB inside the brake booster 105 may be compared.

Here again, ΔPB ≤ K9 and PIMC - PB ≤ K9 may be substituted for the comparison, PIM - PB ≤ K9.

By detecting the decrease in the differential pressure of the atmospheric pressure PA and the brake booster internal pressure (negative pressure) to suspend the automatic stop control of the engine, sufficient brake assist function can be ensured.

Further, the engine may be automatically restored when restarting the engine. Also, the driver may be demanded to start the engine by a buzzer (step 670).

As described above, according to the present invention, deterioration of the brake booster function resulting from increase in frequency of engine stop when automatically stopping and automatically restarting an engine of a vehicle provided with a brake booster using intake negative pressure generated by rotation of the engine, as the boost source, is prevented.

While the present invention has been described with reference to what is presently considered to be a preferred embodiment thereof, it is to be understood that the present invention is not limited to the disclosed embodiment or construction. On the contrary, the present invention is intended to cover various modifications and equivalent arrangements. In addition, while the various elements of the disclosed invention are shown in various combinations and configurations, which are exemplary, other combinations and configurations, including more, less or only a single embodiment, are also within the scope of the present invention defined in the appended claims.

An automatic engine stop and restart device for a vehicle provided with a brake booster using an intake negative pressure generated by the engine rotation as the boost source, is provided with a sensor for detecting the negative pressure of the brake booster. The engine is restarted (steps 180 and 190) when the negative pressure decreases to a predetermined value or less during engine stop. Sufficient surge tank negative pressure, that is, the brake booster negative pressure, is secured by restarting of the engine. This prevents the deterioration of the brake booster function resulting from increased engine stop frequency.

**Claims**

1. An engine stop and restart device, which is installed in a vehicle provided with a brake booster that generates an assist force for assisting a brake force, for stopping an engine when predetermined stop conditions are met and restarting the stopped engine when predetermined restart conditions are met, said device having a vehicle condition detection means for detecting a vehicle condition when the engine is in a stopped state, the device comprising:

   a brake booster internal pressure detection means (107) for detecting the internal pressure (PB) of said brake booster,

   **characterized by**

   an intake side negative pressure detection means (115) for detecting the negative pressure (PIM) on the intake side of the engine, and a pressure comparison means (S630) for comparing the intake side negative pressure (PIM) with the brake booster internal pressure (PB), and that an automatic stop of the engine is permitted (S640) when a difference between the intake side negative pressure (PIM) and the brake booster internal pressure (PB) is equal to or less than a predetermined value (K7) during the engine is under operating condition.

2. An engine stop and restart device according to claim 1, **characterized by** further comprising:

an atmospheric pressure detection means (127) for detecting an atmospheric pressure (PA); and
a pressure comparison means (S660) for comparing the atmospheric pressure (PA) with the brake booster internal pressure (PB),
and that the engine is restarted (S670) when a difference between the atmospheric pressure (PA) and the brake booster internal pressure (PB) has become equal to or less than a predetermined value (K9) during the engine is under stopped condition.

## Patentansprüche

1. Eine Start-Stoppvorrichtung, die in einem Kraftfahrzeug installiert ist, das mit einem Bremskraftverstärker ausgerüstet ist, der eine Unterstützungskraft zur Unterstützung einer Bremskraft erzeugt, zum Stoppen eines Motors, wenn vorbestimmte Stopp-Bedingungen erfüllt sind, und zum Neustarten des gestoppten Motors, wenn vorbestimmte Neustart-Bedingungen erfüllt sind, wobei diese Vorrichtung über Kraftfahrzeug-Zustandserkennungsmittel zum Erkennen eines Kraftfahrzeug-Zustands verfügt, wenn der Motor sich in gestopptem Zustand befindet, wobei die Vorrichtung Folgendes umfasst:

    eine Bremskraftverstärker-Innendruckerkennungsvorrichtung (107) zum Erkennen des Innendrucks (PB) dieses Bremskraftverstärkers;

    **gekennzeichnet durch**

    ein Einlassseiten-Unterdruck-Erkennungsmittel (115) zum Erkennen des Unterdrucks (PIM) auf der Einlassseite des Motors, und

    ein Druckvergleichsmittel (S630) zum Vergleichen des Einlassseiten-Unterdrucks (PIM) mit dem Bremskraftverstärker-Innendruck (PB),

    und **dadurch**, dass ein automatisches Stoppen des Motors zugelassen wird (S640), wenn eine Differenz zwischen dem Einlassseiten-Unterdruck (PIM) und dem Bremskraftverstärker-Innendruck (PB) gleich einem oder kleiner als ein vorbestimmter Wert (K7) ist, während der Motor im Betriebszustand ist.

2. Eine Start-Stoppvorrichtung nach Anspruch 1; **dadurch gekennzeichnet, dass**
    sie weiterhin Folgendes umfasst:

    ein Atmosphärendruck-Erkennungsmittel (127) zum Erkennen eines atmosphärischen Drucks (PA); und

    ein Druckvergleichsmittel (S660) zum Vergleichen des atmosphärischen Drucks (PA) mit dem Bremskraftverstärker-Innendruck (PB),

    und dadurch, dass der Motor neu gestartet wird (S670), wenn eine Differenz zwischen dem atmosphärischen Druck (PA) und dem Bremskraftverstärker-Innendruck (PB) gleich einem oder kleiner als ein vorbestimmter Wert (K9) ist, während der Motor im gestoppten Zustand ist.

## Revendications

1. Dispositif d'arrêt et de redémarrage du moteur, qui est installé dans un véhicule muni d'un servofrein qui génère une force d'assistance destinée à assister une force de freinage, destiné à arrêter un moteur lorsque des conditions d'arrêt prédéterminées sont satisfaites et à redémarrer le moteur arrêté lorsque des , conditions de redémarrage prédéterminées sont satisfaites, ledit dispositif comportant un moyen de détection de condition du véhicule destiné à détecter une condition du véhicule lorsque le moteur se trouve dans un état arrêté, le dispositif comprenant :

    un moyen de détection de pression interne de servofrein (107) destiné à détecter la pression interne (PB) dudit servofrein,

    **caractérisé par**

    un moyen de détection de pression négative du côté de l'admission (115) destiné à détecter la pression négative (PIM) du côté de l'admission du moteur, et
    un moyen de comparaison de pression (S630) destiné à comparer la pression négative du côté de l'admission (PIM) à la pression interne du servofrein (PB),
    et en ce qu'un arrêt automatique du moteur est autorisé (S640) lorsque la différence entre la pression négative du côté de l'admission (PIM) et la pression interne du servofrein (PB) est inférieure ou égale à une valeur prédéterminée (K7) pendant que le moteur est dans un état de fonctionnement.

2. Dispositif d'arrêt et de redémarrage de moteur selon la revendication 1, **caractérisé en ce qu'**il comprend en outre :

    un moyen de détection de pression atmosphérique (127) destiné à détecter une pression atmosphérique (PA), et

un moyen de comparaison de pression (S660) destiné à comparer la pression atmosphérique (PA) à la pression interne de servofrein (PB), et le moteur est redémarré (S670) lorsque la différence entre la pression atmosphérique (PA) et la pression interne de servofrein (PB) est devenue inférieure ou égale à une valeur prédéterminée (K9) pendant que le moteur se trouve dans un état arrêté.

# FIG. 1

S110

START

S120

INPUT SIGNAL PROCESSING

S130

ENGINE AUTOMATICALLY STOPPED?

NO

YES

S140

PARKING BRAKE ON?

NO

YES

S180

BRAKE BOOSTER NEGATIVE PRESSURE SMALL?

NO

YES

S150

CONTINUE AUTOMATIC ENGINE STOP CONTROL

S190

SUSPEND AUTOMATIC ENGINE STOP CONTROL (ENGINE RESTART)

S160

INDICATE IMPLEMENTATION OF AUTOMATIC STOP CONTROL

S200

INDICATE NON-IMPLEMENTATION OF AUTOMATIC STOP CONTROL

S170

RETURN

# FIG. 2

# FIG. 3

ENGINE ROTATIONAL
SPEED N E SENSOR (113) o———————

ENGINE COOLING
WATER TEMPERATURE o———————

IGNITION SWITCH o———————

BATTERY S O U o———————

HEADLIGHT o———————

DEFOGGER o———————

AIR CONDITIONER o———————

VEHICLE SPEED
SENSOR (133) o———————

A T FLUID TEMPERATURE o———————

SHIFT POSITION
SENSOR (131) o———————

PARKING BRAKE o———————

TURBINE ROTATIONAL
SPEED SENSOR o———————

CATALYST TEMPERATURE o———————

ACCELERATOR OPENING
DEGREE SENSOR (130) o———————

CRANK POSITION o———————

FOOT BRAKE SENSOR (140) o———————

E C U
50

———o IGNITION SIGNALS

———o INJECTION SIGNALS

———o STARTER

———o CONTROLLER (M／G)

———o DECELERATION DEVICE

———o A T SOLENOID

———o A T LINE PRESSURE SOLENOID
CONTROL

———o A B S ACTUATOR

———o HILL HOLD CONTROL
IMPLEMENTATION INDICATOR

———o HILL HOLD CONTROL      (81)
NON-IMPLEMENTATION INDICATOR

———o BRAKE BOOSTOR          (82)
NEGATIVE PRESSURE SENSOR (91)

———o SURGE TANK PRESSURE SENSOR
(115)

———o ATMOSPHERIC PRESSURE
SENSOR (127)

# FIG. 4

FIG. 5

# FIG. 6

# FIG. 7

# FIG. 8

# FIG. 9

COMMAND TO RESTORE ENGINE

HYDRAULIC PRESSURE IN C 1

Tac'

Tac

Tc

Tc'

NE

NE1

Tfast

FAST SPPLY, PRESSURE-BOOSTING TIMING

ON

T1

OFF

Tcom

Ts

$t_1$ $t_2$

TIME

# FIG. 10

S110
START

S120
INPUT SIGNAL
PROCESSING

S130
ENGINE
AUTOMATICALLY
STOPPED?
NO
YES

S140
PARKING BRAKE
ON?
NO
YES

S280
FOOT BRAKE
PEDAL OPERATION 5 TIMES
OR MORE?
NO
YES

S150
CONTINUE AUTOMATIC
ENGINE STOP CONTROL

S190
SUSPEND AUTOMATIC
ENGINE STOP CONTROL
(ENGINE RESTART)

S160
INDICATE IMPLEMENTATION
OF AUTOMATIC STOP
CONTROL

S200
INDICATE
NON-IMPLEMENTATION OF
AUTOMATIC STOP CONTROL

S170
RETURN

# FIG. 11

# FIG. 12

START

S302

NO ← AUTOMATIC STOP AND RESTART CONTROL BEING IMPLEMENTED?

↓ YES

S304

DETECTION OF BRAKE BOOSTER PRESSURE P B

S306

ENGINE STOPPED? → NO

↓ YES

S310

NO ← $P B - P B R \geqq K 1$ ?

↓ YES

S308

$P B R \leftarrow P B$

S312

ENGINE RESTART

RETURN

# FIG. 13

```
                    START

         S402
   NO    AUTOMATIC STOP AND
 ◄───    RESTART CONTROL BEING
         IMPLEMENTED?
              │ YES
              │        S404
         ENGINE STOPPED?        NO ──────────┐
              │ YES                          │
                                             │      S418
S406  ┌─────────────────┐         ┌──────────────────┐
      │ F S T P O ← F S T P │       │ F S T P O ← O F F │
      └─────────────────┘         │ F S T P ← O F F   │
              │                   │ C S T P ← 0       │
S408  ┌─────────────────┐         └──────────────────┘
      │ F S T P ← S T P S W │                │
      └─────────────────┘                    │
              │                              │
              │        S410                  │
   NO    F S T P O = O F F  AND              │
 ◄───    E S T P = O N ?                     │
              │ YES                          │
      ┌─────────────────┐                    │
      │ C S T P ← C S T P + 1 │── S412        │
      └─────────────────┘                    │
              │                              │
              │        S414                  │
   NO    C S T P ≧ K 2 ?                      │
 ◄───                                        │
              │ YES                          │
      ┌─────────────────┐                    │
      │ ENGINE RESTART  │── S416              │
      └─────────────────┘                    │
              │                              │
              └──────────────┬───────────────┘
                         RETURN
```

# FIG. 14

START

S502

AUTOMATIC STOP AND RESTART CONTROL BEING IMPLEMENTED?

NO

YES

S504

ENGINE STOPPED?

NO

YES

DETECTION OF S P D

S508

$SPD \geqq K3$ ?

NO

S510

$CT \leftarrow CT + 1$

YES

S516

$CT \leftarrow 0$

S512

$CT \geqq K4$ ?

NO

YES

S514

ENGINE RESTART

RETURN

28

# FIG. 15

1.01bar(760mmHg)

PRESSURE

0.43bar(360mmHg)

ATMOSPHERIC PRESSURE

REQUIRED BRAKE
BOOSTOR PRESSURE

LOW ALTITUDE          HIGH ALTITUDE

ALTITUDE

# FIG. 16

```
        ( START )
            │
            ▼
   ┌──────────────────┐
  /  INPUT SIGNAL      / ── S610
 /   PROCESSING       /
└──────────────────┘
            │
            ▼
         S620
      ╱────────────╲
     ╱ CONDITIONS FOR ╲      NO
    ⟨ PERMITTING ECO-RUN CONTROL⟩ ──────►
     ╲  ESTABLISHED? ╱
      ╲────────────╱
            │ YES
            ▼
         S630
      ╱────────────╲
     ╱   PIM-PB≦K7   ╲
    ╱ AT NE≧K5 AND VTA≦K6? ╲   NO
   ⟨ (△PB≦K7, PIMC-PB≦K7) ⟩ ──────►
     ╲              ╱
      ╲────────────╱
            │ YES                 S640
            ▼
   ┌──────────────────┐
   │ OUTPUT AUTOMATIC ENGINE │
   │  STOP COMMAND TO ECU │
   └──────────────────┘
            │
            ▼
         S650
      ╱────────────╲
     ╱ NE=0 FOR K8 [SEC]? ╲      NO
    ⟨ (ATMOSPHERIC PRESSURE VALUE IS⟩ ──────►
     ╲ SUBSTITUTED FOR PIM) ╱
      ╲────────────╱
            │ YES
            ▼
         S660
      ╱────────────╲
     ╱   PIM-PB≦K9   ╲       NO
    ⟨  ( △PB≦K9 )    ⟩ ──────►
     ╲  PIMC-PB≦K9   ╱
      ╲────────────╱
            │ YES              S670
            ▼
   ┌──────────────────┐
   │ ECO-RUN SUSPENDED (ENGINE RESTART) │
   │ OR, DEMAND A DRIVER TO START │
   │ THE ENGINE BY BUZZER. │
   └──────────────────┘
            │
            ▼
        ( RETURN )
```

# FIG. 17

PA(1)760 (ATMOSPHERIC PRESSURE)

PIM(LOW ALTITUDE)

PIM-PB≦K9

K9

PA(2)

PIM(HIGH ALTITUDE)

(LARGE THROTTLE OPENING DEGREE)

△PB(2)

△PB(1)

K10

PB

K12

K11

PIM-PB≦K7

PUMPING BRAKE

NEGATIVE PRESSURE IS LARGE

(VACUUM) 0

IGON          STAON          ECO-RUN CONTROL ENGINE STOP          ECO-RUN CONTROL ENGINE RESTART          TIME

EP 0 990 793 B1